# EUROPÄISCHE PATENTANMELDUNG

(11) **EP 4 275 489 A1**
(43) Veröffentlichungstag der Anmeldung: **15.11.2023**
(21) Anmeldenummer: 23169842.4
(22) Anmeldetag: 25.04.2023
(51) Int. Cl.: A01M 7/00

(54) **LANDWIRTSCHAFTLICHE VERTEILMASCHINE UND VERFAHREN ZUM AUSBRINGEN EINES JEWEILIGEN VERTEILGUTS**

(30) Priorität: 13.05.2022 DE 102022112090
(71) Anmelder: HORSCH LEEB Application Systems GmbH, 94405 Landau an der Isar (DE)
(72) Erfinder: DAMMER, Karl-Heinz, 94405 Landau an der Isar (DE)
(74) Vertreter: v. Bezold & Partner Patentanwälte - PartG mbB

(57) **Zusammenfassung**

Die Erfindung betrifft eine landwirtschaftliche Verteilmaschine (200), mit einem Verteilgestänge (10), welches Verteilgestänge (10) ein Mittelteil und zwei seitlichen Ausleger umfasst, die jeweils über eine Schwenkachse drehbar mit dem Mittelteil verbunden sind, und wobei am Verteilgestänge (10) eine Mehrzahl von Ausbringelementen (20) zum Ausbringen eines jeweiligen Verteilguts angebracht sind, sowie mit einer Steuereinrichtung die zur Steuerung und/oder Regelung der Ausbringelemente (20) basierend auf erfassten Pflanzenmerkmalen eingerichtet ist und die mit einer Erfassungseinrichtung (30) signalverbunden und/oder signalverbindbar ist. Die Verteilmaschine ist dadurch gekennzeichnet, dass die Erfassungseinrichtung (30) zur Erfassung von Pflanzenmerkmalen eingerichtet ist und derartig an einer Trägereinrichtung angebracht ist, um während einer Überfahrt über eine landwirtschaftliche Fläche (300) zumindest einen Teilbereich einer Bestandshöhe (H) eines Pflanzenbestands zu erfassen.

Die Erfindung betrifft zudem ein Verfahren zum Ausbringen eines jeweiligen Verteilguts.

## Beschreibung

Die Erfindung betrifft eine landwirtschaftliche Verteilmaschine. Die Erfindung betrifft zudem ein Verfahren zum Ausbringen eines jeweiligen Verteilguts.

Beim Anbau von Nutzpflanzen auf einer landwirtschaftlichen Fläche treten üblicherweise unerwünschte Schadorganismen wie bspw. Pilze oder Unkräuter in Erscheinung, die mit den angebauten Nutzpflanzen um Ressourcen konkurrieren, die Durchführung landwirtschaftlicher Maßnahmen behindern oder erschweren, die Qualität der Ernte beeinträchtigen oder in sonstiger Weise den Anbau der Nutzpflanzen in negativer Weise beeinflussen. Es gilt, diese Schadorganismen zu bekämpfen, allerdings ist der großflächige Einsatz von verschiedenen Verteilgütern wie z.B. Herbiziden oder etwa Fungiziden zur Bekämpfung von Schadorganismen umstritten, weshalb oft sogenanntes "Spot Spaying" zum Einsatz kommt. Mit diesem ist es möglich, nur an den Stellen Verteilgut auszubringen, an welchen Schadorganismen vorhanden sind.

Eine gängige Methode, um Schadorganismen zu bekämpfen befasst sich mit dem Ausbringen und/oder der Applikation von unterschiedlichen Verteilgütern mittels einer Verteilmaschine. Die Verteilmaschinen, vorzugsweise Feldspritzen sind mit einem quer zur Fahrtrichtung orientierten und über einen Bestand von Nutzpflanzen bewegbaren Verteilgestänge ausgestattet und in unterschiedlichsten Ausführungsvarianten bekannt.

Die DE 10 2015 119 026 A1 zeigt ein System zur punktgenauen Ausbringung von Verteilgut, wobei mittels eines Ausbringelements in Form eines Sprühkopfs ein Verteilgut, insbesondere eine Flüssigkeit ausbracht wird und mittels verschiedener Einheiten eine thermische oder mechanische Behandlung durchgeführt wird. Eine Erfassungseinrichtung umfasst wenigstens einen lichtsensitiven Sensor, welcher Pflanzenmerkmale in Form von unterschiedlichen Farben erfasst und dadurch Schadorganismen erkennt.

Im Stand der Technik sind Methoden zum Erkennen von Schadorganismen, insbesondere durch ein Erfassen von Pflanzenmerkmalen bekannt, welche Methoden häufig nicht zuverlässig genug sind. Bekannt ist beispielsweise Bilder der Nutzpflanzen von oben herab vorzugsweise mittels einer an einer Drohne montierten Kamera aufzunehmen, die Positionen der Schadorganismen zu speichern und beim Ausbringen von Verteilgut auf diese Positionen zurückzugreifen. Nachteilig daran ist, dass stellenweise Schadorganismen im Anfangsstadium lediglich im unteren Bereich der Nutzpflanze (z.B. am Stängel oder an den unteren Blättern) auftreten, weshalb diese nicht durch eine Kamera, welche von oben herab auf eine Nutzpflanze blickt, erkannt werden können.

Aufgabe der Erfindung ist es somit, die beschriebenen Nachteile des Standes der Technik zu beseitigen. Insbesondere soll eine landwirtschaftliche Verteilmaschine bereitgestellt werden, welche es ermöglicht, während einer Überfahrt über eine landwirtschaftliche Fläche zumindest einen Teilbereich einer Bestandshöhe zu erfassen, um Schadorganismen zu erkennen.

Diese Aufgaben werden gelöst durch eine landwirtschaftliche Verteilmaschine mit den Merkmalen des unabhängigen Anspruch 1 und durch ein Verfahren zum Ausbringen eines jeweiligen Verteilguts mit den Merkmalen des Verfahrensanspruch 12. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird eine landwirtschaftliche Verteilmaschine bereitgestellt. Die landwirtschaftliche Verteilmaschine ist vorzugsweise als eine Feldspritze und/oder als ein pneumatischer Düngerstreuer ausgebildet. Außerdem kann die Verteilmaschine als eine selbstfahrende Verteilmaschine oder als eine mit einem landwirtschaftlichen Zugfahrzeug (z.B. Traktor) gekoppelte Verteilmaschine ausgeführt sein.

Die Verteilmaschine umfasst ein Verteilgestänge mit einem Mittelteil und zwei seitlichen Auslegern, die jeweils über eine Schwenkachse drehbar mit dem Mittelteil verbunden sind.

Am Verteilgestänge ist eine Mehrzahl von Ausbringelementen zum Ausbringen eines jeweiligen Verteilguts angebracht. Das jeweilige Verteilgut kann beispielsweise Düngemittel oder Pflanzenschutzmittel umfassen.

Vorzugsweise sind die Ausbringelemente am Mittelteil und an den zwei seitlichen Auslegern an unterschiedlichen Positionen entlang des Verteilgestänges angeordnet. Die Ausbringelemente sind bevorzugt mit einem Leitungssystem wirktechnisch gekoppelt, wobei das Leitungssystem mittels einer, durch die Steuereinrichtung steuerbaren und/oder regelbaren Fördereinrichtung mit einem veränderbaren Förderdruck beaufschlagbar ist. Die Ausbringelemente umfassen vorzugsweise Spritzdüsen, wobei es möglich ist, dass bspw. verschiedene Spritzdüsen gleichzeitig verwendet werden. Je nach Art des Verteilguts (z.B. Pflanzenschutzmittel) können verschiedenste Ausbringelemente eingesetzt werden, welche Ausbringelemente verschiedene Ausbringeigenschaften besitzen. Es ist auch möglich, eine Ausbringmenge des Verteilguts durch die Ausbringelemente zu verändern.

Eine Steuereinrichtung ist zur Steuerung und/oder Regelung der Ausbringelemente basierend auf den erfassten Pflanzenmerkmalen eingerichtet und ist mit einer Erfassungseinrichtung signalverbunden und/oder verbindbar. Vorzugsweise ist es möglich, die Ausbringelemente derartig zu steuern und/oder zu regeln, dass das jeweilige Verteilgut an den Stellen, an denen Schadorganismen vorhanden sind, ausgebracht wird. Insbesondere kann die Verteilmaschine zur Ausbringung eines jeweiliges Verteilguts und zur Erfassung von Pflanzenmerkmalen während einer Überfahrt über eine landwirtschaftliche Fläche eingerichtet sein. Es ist aber auch möglich, während einer ersten Überfahrt die Pflanzenmerkmale mittels der Erfassungseinrichtung zu Erfassen und während einer zweiten Überfahrt ein jeweiliges Verteilgut auszubringen.

Die Erfassungseinrichtung ist zur Erfassung von Pflanzenmerkmalen eingerichtet und derartig an einer Trägereinrichtung angebracht, um während einer Überfahrt über eine landwirtschaftliche Fläche zumindest einen Teilbereich einer Bestandshöhe eines Pflanzenbestands zu erfassen. Dadurch können beispielsweise Schadorganismen in Form von Krankheiten wie Pilzbefall oder ähnlichem an Nutzpflanzen erkannt werden oder etwa Unkräuter erkannt werden, die beispielsweise zwischen den Nutzpflanzen wachsen.

Um eine Erfassung von Pflanzenmerkmalen, insbesondere eine Erfassung von Schadorganismen zu verbessern, ist die Erfassungseinrichtung derartig an einer Trägereinheit angebracht, um während einer Überfahrt über eine landwirtschaftliche Fläche zumindest einen Teilbereich einer Bestandshöhe zu erfassen. Insbesondere soll dadurch ein größerer Bereich der Nutzpflanze erfasst werden, wie z.B. der Stängel, welcher bspw. als erster durch Schadorganismen wie einen Pilz befallen werden könnte.

Infolge der Erfindungsgemäßen Maßnahmen wird eine landwirtschaftliche Verteilmaschine zum verbesserten Ausbringen eines jeweiligen Verteilguts anhand erfasster Pflanzenmerkmalen bereitgestellt.

Es sei darauf hingewiesen, dass im Kontext der Erfindung durch die Definition Schadorganismen alle Pflanzen, Tiere oder Krankheitserreger umfasst sind, welche Pflanzen, insbesondere Nutzpflanzen schädigen. Dazu zählen unter anderen Insekten, Pilze, oder beispielsweise Unkräuter.

Eine bevorzugte Ausführungsvariante der Erfindung kann vorsehen, dass die Pflanzenmerkmale zumindest spektrale Merkmale, Formparameter und/oder morphologische Eigenschaften umfassen. Durch diese Pflanzenmerkmale ist es vorzugsweise möglich, verschiedene Arten von Schadorganismen zu erkennen oder beispielsweise Nutzpflanzen von Schadorganismen zu unterscheiden. Typischerweise umfasst ein jeweiliger Schadorganismus an Nutzpflanzen beispielsweise Flecken, Verfärbungen, Punkte, Formen oder Muster, die beispielsweise an Blättern sichtbar sind und welche beispielsweise jeweiligen Krankheiten oder Pilzen zugeordnet werden können. Es ist auch möglich, dass beispielsweise Farben, Formen oder Muster vorzugsweise verschiedenen Unkräutern und/oder der jeweiligen Nutzpflanze zugeordnet werden können. Spektrale Merkmale umfassen vorzugsweise verschiedene Wellenlängen oder Frequenzen des Lichts. Beispielsweise können mittels eines Infrarotsensors Pflanzenmerkmale durch Reflexion einer Strahlung des Infrarotsensors an der Pflanze erfasst werden, dass wird durch eine unterschiedliche Reflexion von bspw. geschädigten Pflanzenmaterial und/oder gesunden Pflanzenmaterial einer jeweiligen Nutzpflanze ermöglicht. Außerdem ist es möglich, mittels Formparametern bspw. Umrisse von Schadorganismen zu erkennen. Es ist auch möglich, morphologische Eigenschaften wie vorzugsweise Durchmesser, Längen, Wurzeleigenschaften oder etwa einen aktuellen Gehalt an Nährwerten zu ermitteln.

Gemäß einer weiteren Ausführungsvariante ist die Steuereinrichtung zudem dazu eingerichtet ist, hinterlegte und/oder hinterlegbare Soll-Pflanzenmerkmale mit den erfassten Pflanzenmerkmalen der Erfassungseinrichtung zu vergleichen und basierend auf diesem Vergleich die Ausbringelemente zu Steuern und/oder zu Regeln. Die Soll-Pflanzenmerkmale, können beispielsweise in einer Speichereinrichtung in Form von bekannten Bildern, Formen oder ähnlichem von Nutzpflanzen und/oder Schadorganismen hinterlegt werden und mit erfassten Pflanzenmerkmalen der Erfassungseinrichtung vorzugsweise durch eine künstliche Intelligenz abgeglichen werden. Es ist auch möglich, auf die Soll-Pflanzenmerkmale bspw. mittels einer digitalen Datenbank zuzugreifen. Es ist darüber hinaus möglich, beispielsweise auf eine Art von Schadorganismen oder ein Stadium der Ausbreitung der Schadorganismen zu schließen. So ist es auch möglich, verschiedene Vorhersagen zu berechnen, beispielsweise wie und in welcher Zeit sich die Schadorganismen ausbreiten werden. Vorzugsweise werden die verschiedenen erfassten Pflanzenmerkmale miteinander verknüpft und vorzugsweise mittels einer künstlichen Intelligenz beispielsweise nach der Art der Schadorganismen klassifiziert.

Gemäß einer Ausführungsvariante der Erfindung kann vorgesehen sein, dass eine Größe einer, mit dem jeweiligen Verteilgut zu behandelnden Fläche einstellbar ist, insbesondere abhängig von den, durch die Erfassungseinrichtung erfassten Pflanzenmerkmalen, einstellbar ist. Die Größe der Fläche wird vorzugsweise durch ein Aktivieren und Deaktivieren der Ausbringelemente quer zur Fahrtrichtung sowie anhand einer zurückgelegten Wegstrecke der Verteilmaschine eingestellt. Wobei eine Wegstrecke vorzugsweise in Abhängigkeit einer Fahrgeschwindigkeit der Verteilmaschine eingestellt werden kann. Die Größe der Fläche ergibt sich vorzugsweise durch eine mittels den Ausbringelementen (z.B. Spritzdüse) mit Verteilgut bedeckte, d.h. erzeugte Fläche. Diese Fläche wird vorzugsweise je nach Größe der Schadorganismen eingestellt. Demnach werden die Ausbringelemente vorzugsweise auch in Abhängigkeit der Größe der Schadorganismen angesteuert.

Gemäß einem weiteren Aspekt der Erfindung kann vorgesehen sein, dass die Steuereinrichtung zudem dazu eingerichtet ist, in Abhängigkeit der Pflanzenmerkmale eine Ausbringmenge und/oder eine Art des jeweiligen Verteilguts zu steuern und/oder zu regeln. Dadurch ist es möglich, beispielsweise je nach Art der Schadorganismen oder nach dem Stadium der Ausbreitung der Schadorganismen möglichst effizient zu reagieren. Vorzugsweise kann bei einer hohen Menge an Schadorganismen mehr Verteilgut oder Verteilgut mit einer höheren Konzentration eines entsprechenden Verteilgut ausgebracht werden. Es ist denkbar, dass verschiedene Arten von Schadorganismen in der Steuereinrichtung hinterlegt und/oder hinterlegbar sind, wodurch bspw. die Steuerung und/oder Regelung ermöglicht wird. Es ist auch möglich, dass anhand der Pflanzenmerkmale bspw. auf den Nähstoffgehalt von Nutzpflanzen geschlossen wird oder diesen zu messen, um Dünger gezielt an Stellen auszubringen, an welchen bspw. zu wenig Nähstoffe vorhanden sind.

Gemäß einem weiteren Aspekt der Erfindung ist es möglich, dass die Verteilmaschine ein Direkteinspeisesystem umfasst, mittels welchem eine Art des jeweiligen Verteilguts anpassbar ist, wobei das Direkteinspeisesystem mittels der Steuereinrichtung entsprechend steuer- und/oder regelbar ist. Dadurch ist es möglich, flüssigen Wirkstoff und/oder einen in einer Flüssigkeit gelösten Wirkstoff, z.B. ein auszubringendes Pflanzenschutzmittel, bei Bedarf zu einer Trägerflüssigkeit, einer bereits fertig angemischten Spritzflüssigkeit per Direkteinspeisung hinzu zudosieren.

Gemäß einem weiteren Aspekt der Erfindung ist es möglich, dass die Steuereinrichtung zudem dazu eingerichtet ist, dass Schwellenwerte für die Pflanzenmerkmale in dieser hinterlegt und/oder hinterlegbar sind, wobei die Steuereinrichtung zudem dazu eingerichtet ist die Ausbringelemente anhand der Schwellenwerte zu steuern und/oder zu regeln. Beispielsweise ist es möglich, dass ab einem bestimmten Schwellenwert eine vorher hinterlegte Ausbringmenge und Art eines Verteilguts ausgebracht wird. Es ist auch möglich, dass mittels mehreren Schwellenwerten Pflanzenmerkmale für verschiedene Arten von Schadorganismen hinterlegt werden können, welche bei Vorhandensein mit einem bestimmten Verteilgut und einer bestimmten Ausbringmenge an Verteilgut behandelt werden.

Es ist möglich, dass die Erfassungseinrichtung mittels der Trägereinrichtung an der Verteilmaschine, vorzugsweise am Verteilgestänge angebracht ist und/oder an einer externen Maschine angebracht ist. Die Erfassungseinrichtung kann dadurch zumindest teilweise im Bereich der Bestandshöhe vorzugsweise während einer Überfahrt über eine landwirtschaftliche Fläche Pflanzenmerkmale erfassen. Es ist aber auch möglich, dass eine externe Maschine beispielsweise nur zur Erfassung von Pflanzenmerkmalen eingesetzt wird, während eine Verteilmaschine zum Ausbringen eines jeweiligen Verteilguts eingerichtet ist.

Es ist auch möglich, dass die Erfassungseinrichtung zur Erfassung der Pflanzenmerkmale zumindest eine Kamera und/oder einen Sensor, vorzugsweise zwei oder mehrere Kameras und/oder Sensoren umfasst. Beispielsweise können verschiedene Arten von Sensoren und/oder Kameras gleichzeitig umfasst sein. Es ist möglich, dadurch verschiedene Analysen durchzuführen, vorzugsweise Farbanalysen (z.B. Graustufen mit NIR-Filter), Bildervergleiche, Analysen von 3D-Modellen oder etwa Segmentieren von Bildern. Vorzugsweise können beispielsweise zumindest ein Thermischer Sensor, Infrarotsensor, Spektralsensor (z.B. Multispektral, Hyperspektral), LIDAR-Sensor, Sonarsensor, Farbsensor (z.B. RGB-Werte erfassen) und/oder bspw. zumindest ein Ultraschallsensor oder ähnliches zum Einsatz kommen. Es ist auch möglich, dass die Erfassungseinrichtung mit einer künstlichen Intelligenz oder ähnlichem verknüpft ist und diese künstliche Intelligenz zur Auswertung der erfassten Pflanzenmerkmale verwendet wird.

Gemäß einer weiteren Ausführungsform kann vorgesehen sein, dass die Erfassungseinrichtung einen Erfassungsbereich umfasst, welcher mittels der Trägereinrichtung, insbesondere anhand einer Bestandshöhe, höhenverstellbar ist, wobei eine Höhenverstellung mittels der Trägereinrichtung und/oder mittels der Steuereinrichtung erfolgt. Vorzugsweise können die zumindest eine Kamera und/oder der zumindest eine Sensor, vorzugsweise die zwei oder mehreren Kameras und/oder Sensoren einzeln höhenverstellt werden. Es ist auch denkbar, dass zumindest eine Kamera und zumindest ein Sensor gruppenweise höhenverstellbar ist, bspw. durch eine derartige Halterung. Beispielsweise kann eine Kamera und/oder ein Sensor mittig von einer Bestandshöhe ausgerichtet werden. Es ist auch möglich, dass durch eine Höhenverstellung ein entsprechendes Aktivieren oder Deaktivieren der Erfassungseinrichtung, insbesondere eines Sensors und/oder einer Kamera oder mehrerer Sensoren und/oder mehrerer Kameras erfolgen kann. Alternativ oder ergänzend ist es auch möglich, dass bspw. durch ein Aktivieren oder Deaktivieren der Erfassungseinrichtung bspw. eine Bestandshöhe automatisch erkannt wird und eine Höheneinstellung vorgenommen wird.

Es ist möglich, dass die Erfassungseinrichtung dazu eingerichtet ist, Reihen von Nutzpflanzen eines Pflanzenbestands einer landwirtschaftlichen Fläche zu erfassen, wobei die Erfassungseinrichtung vorzugsweise quer zur Fahrtrichtung verschiebbar sein kann, insbesondere derartig, dass eine Lage der Erfassungseinrichtung quer zu einer Fahrtrichtung an die Reihen von Nutzpflanzen angepasst wird. Somit ist es auch möglich, einen bestimmten Abstand zwischen den Nutzpflanzen und der Erfassungseinrichtung einzustellen.

Es ist auch möglich, dass das Ausbringen des jeweiligen Verteilguts mittels eines Ringleitungssystems ausgeführt wird. Das Leitungssystem kann vorzugsweise wenigstens eine Versorgungsleitung umfassen und mit den Ausbringelementen verbunden sein. Es ist auch möglich, dass das Leitungssystem als wenigstens ein pneumatisches Leitungssystem ausgebildet und mit den Ausbringelementen verbunden ist.

Es ist ebenfalls möglich, dass vorzugsweise dem Verteilgestänge und/oder den Ausbringelementen und/oder dem zumindest einen Ausbringelement zumindest ein Überwachungsmittel (z.B. Kamera, Sensor) nachgeordnet ist. Das Überwachungsmittel kann bspw. ein Verteilmuster eines ausgebrachten Verteilguts und/oder z.B. Tropfen einer Flüssigkeit vorzugsweise auf Nutzpflanzen und/oder Schadorganismen erkennen. Eine durch das Überwachungsmittel erkannte tatsächlich vorhandene Benetzung kann an die Steuereinrichtung übermittelt werden und beispielsweise an eine Ausbringmenge angepasst werden. Somit kann eine Auswertung durch die Steuereinrichtung erfolgen, beispielsweise in welchen Bereichen einer landwirtschaftlichen Fläche - die Nutzpflanzen und/oder die Schadorganismen benetzt wurden, wie stark, also wie gleichmäßig, diese benetzt wurden und/oder mit welchen Tropfenspektrum, also welcher Tropfengröße, diese benetzt wurden. Es ist auch möglich, dass bspw. ein Überwachungsmittel einer Gruppe von Ausbringelementen zugeordnet ist. Es ist somit auch möglich, dass die erkannte tatsächlich vorhandene Benetzung an die erfassten Pflanzenmerkmale angepasst werden kann.

Das jeweilige Verteilgut wird vorzugsweise durch einen Vorratsbehälter, der an der Verteilmaschine angebracht ist, bereitgestellt und bspw. mit einer Förderpumpe über das Leitungssystem zu den jeweiligen Ausbringelementen befördert. Es ist möglich, dass die Förderpumpe bspw. eine Kreiselpumpe umfasst.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sei darauf hingewiesen, dass die erfindungsgemäßen Ausführungsformen und Merkmale in beliebiger Weise und Frei mit der Vorrichtung und/oder dem Verfahren kombinierbar sind. Dementsprechend sind alle Ausführungsformen und erfindungsgemäßen Merkmale sowohl für die Vorrichtung als auch für das Verfahren offenbart und beanspruchbar.

Die Erfindung umfasst außerdem ein Verfahren zum Ausbringen eines jeweiligen Verteilguts, ausgeführt mittels einer landwirtschaftlichen Verteilmaschine, welche Verteilmaschine ein Verteilgestänge, mit einem Mittelteil und zwei seitlichen Auslegern, die jeweils über eine Schwenkachse drehbar mit dem Mittelteil verbunden sind, umfasst.

Das Verfahren beinhaltet eine Ausbringung des jeweiligen Verteilguts mittels einer Mehrzahl von am Verteilgestänge angeordneten Ausbringelementen.

Das Verfahren umfasst außerdem eine Steuerung und/oder Regelung der Ausbringelemente basierend auf erfassten Pflanzenmerkmalen mittels einer Steuereinrichtung, welche Steuereinrichtung mit einer Erfassungseinrichtung signalverbunden und/oder signalverbindbar ist

Das Verfahren umfasst außerdem eine Erfassung von Pflanzenmerkmalen, zumindest eines Teilbereichs einer Bestandshöhe eines Pflanzenbestands, während einer Überfahrt über eine landwirtschaftliche Fläche, mittels der Erfassungseinrichtung.

Eine Weiterbildung der Erfindung kann zudem gekennzeichnet sein durch, eine Einstellung einer, mit dem jeweiligen Verteilgut zu behandelnden Fläche, insbesondere abhängig von den durch die Erfassungseinrichtung erfassten Pflanzenmerkmalen.

Eine Weiterbildung der Erfindung kann zudem gekennzeichnet sein durch, eine ergänzende Steuerung und/oder Regelung einer Ausbringmenge und/oder einer Art des jeweiligen Verteilguts, durch die Steuereinrichtung.

Gemäß einem Aspekt der Erfindung kann ein Hinterlegen von Schwellenwerten für die Pflanzenmerkmale in der Steuereinrichtung und ein Steuern und/oder Regeln der Ausbringelemente mittels der Steuereinrichtung anhand der Schwellenwerte erfolgen.

In einer bevorzugten Ausführungsform des erfindungsgemäßen Verfahrens ist dieses mit einer landwirtschaftlichen Verteilmaschine nach einer der vorstehend beschriebenen Ausführungsformen ausführbar.

Hinsichtlich der Vorteile und Ausführungsformen des erfindungsgemäßen Verfahrens wird auch auf die Vorteile und Ausführungsformen der erfindungsgemäßen landwirtschaftlichen Verteilmaschine verwiesen.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Seitenansicht einer landwirtschaftlichen Verteilmaschine, während einer Überfahrt über eine landwirtschaftliche Fläche
- Figur 2: eine schematische Ansicht einer Nutzpflanze einer landwirtschaftlichen Fläche mit deren Pflanzenmerkmalen.

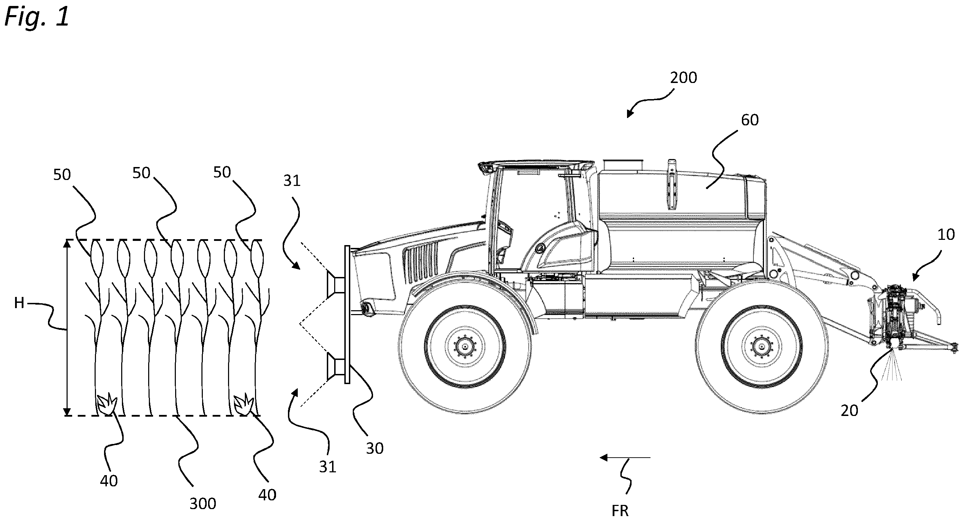

Die in den Figuren 1 bis 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt eine Seitenansicht der landwirtschaftlichen Verteilmaschine 200 während einer Überfahrt über eine landwirtschaftlichen Fläche 300. Außerdem ist eine Vielzahl von Nutzpflanzen 50, welche auf der landwirtschaftlichen Fläche 300 angeordnet sind, gezeigt.

Die Verteilmaschine 200 ist gemäß dem Ausführungsbeispiel als selbstfahrende Feldspritze mit einem Verteilgestänge 10, welches Verteilgestänge 10 ein Mittelteil und zwei seitlichen Ausleger umfasst, die jeweils über eine Schwenkachse drehbar mit dem Mittelteil verbunden sind, ausgebildet. Es ist auch möglich, dass die Verteilmaschine 200 als eine mit einem landwirtschaftlichen Zugfahrzeug (bspw. Traktor) gekoppelte Verteilmaschine ausgeführt ist.

Die seitlichen Ausleger sind quer zur Fahrtrichtung FR, im ausgeklappten Zustand gezeigt und können für eine Transportfahrt (bspw. auf einer Straße) zusammengeklappt werden. Die Verteilmaschine 200 umfasst außerdem einen Vorratsbehälter 60, welcher zur Bereitstellung eines jeweiligen Verteilguts dient. Die Verteilmaschine 200 kann vorzugsweise ein Direkteinspeisesystem umfassen.

Das Verteilgestänge 10 umfasst eine Mehrzahl von Ausbringelementen 20 zum Ausbringen eines jeweiligen Verteilguts. Die Ausbringelemente 20 bringen ein jeweiliges Verteilgut beispielsweise in Form einer Flüssigkeit wie z.B. Pflanzenschutzmittels aus, wobei jedes Ausbringelement 20 einen Spritzfächer erzeugt.

Eine Steuereinrichtung ist zur Steuerung und/oder Regelung der Ausbringelemente 20 basierend auf den erfassten Pflanzenmerkmalen 40 eingerichtet und mit einer Erfassungseinrichtung 30 signalverbunden und/oder signalverbindbar.

Die Steuereinrichtung ist zudem dazu eingerichtet, hinterlegte und/oder hinterlegbare Soll-Pflanzenmerkmale mit den erfassten Pflanzenmerkmalen der Erfassungseinrichtung 30 zu vergleichen und basierend auf diesem Vergleich die Ausbringelemente zu steuern und/oder zu regeln. Bspw. kann eine Form von Schadorganismen 40 beispielsweise eines Unkrauts als Soll-Pflanzenmerkmal hinterlegt sein.

Die Steuereinrichtung kann zudem dazu eingerichtet sein, in Abhängigkeit der Pflanzenmerkmale eine Ausbringmenge und/oder eine Art des jeweiligen Verteilguts zu steuern und/oder regeln. Bspw. werden die zwei gezeigten Schadorganismen 40 in Form von Unkraut durch die Erfassungseinrichtung erkannt, demnach ist es möglich, gezielt bspw. Pflanzenschutzmittel in einer definierten Ausbringmenge einzusetzen.

Die Verteilmaschine kann zudem ein Direkteinspeisesystem umfassen, mittels welchem eine Art des jeweiligen Verteilguts anpassbar ist, wobei das Direkteinspeisesystem mittels der Steuereinrichtung entsprechend steuer- und/oder regelbar ist.

Die Steuereinrichtung ist zudem dazu eingerichtet, dass Schwellenwerte für die Pflanzenmerkmale in dieser hinterlegt und/oder hinterlegbar sind, wobei die Steuereinrichtung zudem dazu eingerichtet ist, die Ausbringelemente 20 anhand der Schwellenwerte zu steuern und/oder regeln.

Die Erfassungseinrichtung 30 ist zur Erfassung von Pflanzenmerkmalen eingerichtet und derartig an einer Trägereinrichtung angebracht, um während einer Überfahrt über eine landwirtschaftliche Fläche 300 zumindest einen Teilbereich einer Bestandshöhe H eines Pflanzenbestands zu erfassen. Die Erfassungseinrichtung 30 ist zur Erfassung von Pflanzenmerkmalen eingerichtet, wobei anhand der Pflanzenmerkmale Schadorganismen 40 erkannt werden können. Die in Figur 1 gezeigten Schadorganismen 40 umfassen Unkräuter, die sich zwischen den Nutzpflanzen 50 befinden.

Die Erfassungseinrichtung ist mittels der Trägereinrichtung an der Verteilmaschine 200, vorzugsweise am Verteilgestänge 10 angebracht und/oder an einer externen Maschine angebracht. Gemäß dem Ausführungsbeispiel ist die Erfassungseinrichtung 30 im vorderen Bereich der Verteilmaschine 200 angebracht. Es ist auch möglich, die Erfassungseinrichtung 30 am Verteilgestänge 10 anzubringen.

Die Erfassungseinrichtung 30 umfasst zur Erfassung der Pflanzenmerkmale zumindest eine Kamera und/oder einen Sensor, vorzugsweise zwei oder mehrere Kameras und/oder Sensoren. Gemäß dem Ausführungsbeispiel umfasst die Erfassungseinrichtung 30 zwei senkrecht übereinander angeordnete Kameras oder Sensoren. Es ist allerdings auch denkbar mehrere Kameras und/oder Sensoren quer zur Fahrtrichtung FR nebeneinander und/oder übereinander anzuordnen.

Die Erfassungseinrichtung 30 umfasst einen Erfassungsbereich 31, welcher insbesondere anhand einer Bestandshöhe H höhenverstellbar ist, wobei eine Höhenverstellung mittels der Trägereinrichtung und/oder mittels der Steuereinrichtung erfolgt. Eine Höhenverstellung des Erfassungsbereichs 31 kann derartig erfolgen, dass die Erfassungseinrichtung 30 zumindest teilweise im Bereich einer Bestandshöhe H vorzugsweise entlang einer vertikalen Richtung bewegt wird. Gemäß der Figur 1 ist die gesamte Erfassungseinrichtung 30 im Bereich der Bestandshöhe H angeordnet, es ist allerdings auch möglich, dass beispielsweise nur ein Sensor und/oder eine Kamera im Bereich der Bestandshöhe H angeordnet sind. Zum Beispiel ist es auch möglich, nur jeweils bspw. die untere Kamera oder den unteren Sensor im Bereich der Bestandshöhe H anzuordnen. Gemäß einem weiteren Ausführungsbeispiel könnte die Erfassungseinrichtung 30 am Verteilgestänge 10 angeordnet sein. Es wäre denkbar, dass beispielsweise an den zwei Auslegern des Verteilgestänges vorzugsweise jeweils ein Sensor und/oder eine Kamera, insbesondere jeweils mehrere Sensoren und/oder Kameras angeordnet sind.

Die Erfassungseinrichtung 30 kann zudem dazu eingerichtet sein, Reihen von Nutzpflanzen 50 eines Pflanzenbestands einer landwirtschaftlichen Fläche 300 zu erfassen, wobei die Erfassungseinrichtung 30 vorzugsweise quer zur Fahrtrichtung FR verschiebbar ist, insbesondere derartig, dass die eine Lage der Erfassungseinrichtung 30 quer zur einer Fahrtrichtung FR an die Reihen von Nutzpflanzen 50 angepasst wird.

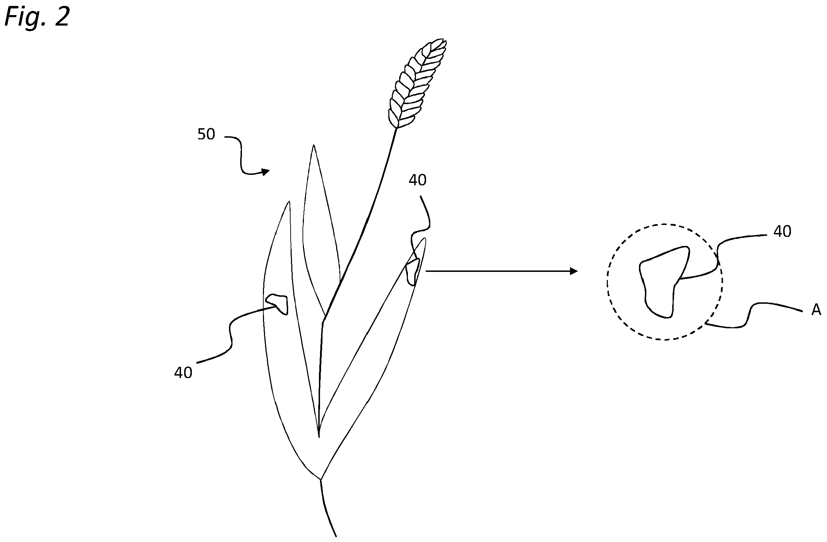

Figur 2 zeigt eine schematische Ansicht einer Nutzpflanze 50 auf einer landwirtschaftlichen Fläche 300 mit Schadorganismen 40 in Form eines Pilzbefalls.

Die Pflanzenmerkmale umfassen Spektrale Merkmale, Formparameter und/oder Morphologische Eigenschaften. Gemäß dem Ausführungsbeispiel werden Pflanzenmerkmale erfasst und Schadorganismen in Form eines Pilzbefalls auf der Nutzpflanze 50 erkannt.

Eine Größe einer, mit dem jeweiligen Verteilgut zu behandelnden Fläche A ist einstellbar, insbesondere abhängig von den, durch die Erfassungseinrichtung 30 erfassten Pflanzenmerkmalen. Gemäß der Figur 2 ist die Fläche A als Kreis gebildet. Dieser Kreis entsteht durch ein Aktivieren eines Ausbringelements 20 (z.B. Spritzdüse), es ist aber auch möglich, durch den Einsatz mehrerer Ausbringelemente 20 größere Flächen A, vorzugsweise abhängig von einer Form und/oder einer Größe der durch die Pflanzenmerkmale erkannten Schadorganismen 40, einzustellen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | | |
|---|---|---|---|
| 10 | Verteilgestänge | A | Fläche |
| 20 | Ausbringelemente | FR | Fahrtrichtung |
| 30 | Erfassungseinrichtung | H | Bestandshöhe |
| 31 | Erfassungsbereich | | |
| 40 | Schadorganismen | | |
| 50 | Nutzpflanze | | |
| 60 | Vorratsbehälter | | |
| 200 | Landwirtschaftliche Verteilmaschine | | |
| 300 | Landwirtschaftliche Fläche | | |

## Patentansprüche

1. Landwirtschaftliche Verteilmaschine (200), mit einem Verteilgestänge (10), welches Verteilgestänge (10) ein Mittelteil und zwei seitlichen Ausleger umfasst, die jeweils über eine Schwenkachse drehbar mit dem Mittelteil verbunden sind, und wobei am Verteilgestänge (10) eine Mehrzahl von Ausbringelementen (20) zum Ausbringen eines jeweiligen Verteilguts angebracht sind, sowie mit einer Steuereinrichtung die zur Steuerung und/oder Regelung der Ausbringelemente (20) basierend auf erfassten Pflanzenmerkmalen eingerichtet ist und die mit einer Erfassungseinrichtung (30) signalverbunden und/oder signalverbindbar ist, **dadurch gekennzeichnet, dass** die Erfassungseinrichtung (30) zur Erfassung von Pflanzenmerkmalen eingerichtet ist und derartig an einer Trägereinrichtung angebracht ist, um während einer Überfahrt über eine landwirtschaftliche Fläche (300) zumindest einen Teilbereich einer Bestandshöhe (H) eines Pflanzenbestands zu erfassen.

2. Landwirtschaftliche Verteilmaschine (200) nach Anspruch 1, **dadurch gekennzeichnet, dass** die Pflanzenmerkmale zumindest eines von folgenden umfassen:
- Spektrale Merkmale,
- Formparameter, und/oder
- morphologische Eigenschaften.

3. Landwirtschaftliche Verteilmaschine (200) nach Anspruch 1 oder 2, **dadurch gekennzeichnet, dass** die Steuereinrichtung zudem dazu eingerichtet ist, hinterlegte und/oder hinterlegbare Soll-Pflanzenmerkmale mit den erfassten Pflanzenmerkmalen der Erfassungseinrichtung (30) zu vergleichen und basierend auf diesem Vergleich die Ausbringelemente (20) zu steuern und/oder zu regeln.

4. Landwirtschaftliche Verteilmaschine (200) nach einem der vorhergehenden Ansprüche, **dadurch gekennzeichnet, dass** eine Größe einer, mit dem jeweiligen Verteilgut zu behandelnden, Fläche (A) einstellbar ist, insbesondere abhängig von den, durch die Erfassungseinrichtung (30) erfassten Pflanzenmerkmalen, einstellbar ist.

5. Landwirtschaftliche Verteilmaschine (200) nach einem der vorhergehenden Ansprüche, **dadurch gekennzeichnet, dass** die Steuereinrichtung zudem dazu eingerichtet ist, in Abhängigkeit der Pflanzenmerkmale eine Ausbringmenge und/oder eine Art des jeweiligen Verteilguts zu steuern und/oder regeln.

6. Landwirtschaftliche Verteilmaschine (200) nach Anspruch 5, **dadurch gekennzeichnet, dass** die Verteilmaschine (200) zudem ein Direkteinspeisesystem umfasst, mittels welchem eine Art des jeweiligen Verteilguts anpassbar ist, wobei das Direkteinspeisesystem mittels der Steuereinrichtung entsprechend steuer- und/oder regelbar ist.

7. Landwirtschaftliche Verteilmaschine (200) nach einem der vorhergehenden Ansprüche, **dadurch gekennzeichnet, dass** die Steuereinrichtung zudem dazu eingerichtet ist, dass Schwellenwerte für die Pflanzenmerkmale hinterlegt und/oder hinterlegbar sind, wobei die Steuereinrichtung zudem dazu eingerichtet ist, die Ausbringelemente (20) anhand der Schwellenwerte zu steuern und/oder zu regeln.

8. Landwirtschaftliche Verteilmaschine (200) nach einem der vorhergehenden Ansprüche, **dadurch gekennzeichnet, dass** die Erfassungseinrichtung (30) mittels der Trägereinrichtung an der Verteilmaschine (200), vorzugsweise am Verteilgestänge (10) angebracht ist und/oder an einer externen Maschine angebracht ist.

9. Landwirtschaftliche Verteilmaschine (200) nach einem der vorhergehenden Ansprüche, **dadurch gekennzeichnet, dass** die Erfassungseinrichtung (30) zur Erfassung der Pflanzenmerkmale zumindest eine Kamera und/oder einen Sensor, vorzugsweise zwei oder mehrere Kameras und/oder Sensoren umfasst.

10. Landwirtschaftliche Verteilmaschine (200) nach einem der vorhergehenden Ansprüche, **dadurch gekennzeichnet, dass** die Erfassungseinrichtung (30) einen Erfassungsbereich (31) umfasst, welcher insbesondere anhand einer Bestandshöhe (H), höhenverstellbar ist, wobei eine Höhenverstellung mittels der Trägereinrichtung und/oder mittels der Steuereinrichtung erfolgt.

11. Landwirtschaftliche Verteilmaschine (200) nach einem der vorhergehenden Ansprüche, **dadurch gekennzeichnet, dass** die Erfassungseinrichtung (30) zudem dazu eingerichtet ist, Reihen von Nutzpflanzen (50) eines Pflanzenbestands einer landwirtschaftlichen Fläche (300) zu erfassen, wobei die Erfassungseinrichtung (30) vorzugsweise quer zur Fahrtrichtung (FR) verschiebbar ist, insbesondere derartig, dass eine Lage der Erfassungseinrichtung (30) quer zur Fahrtrichtung (FR) an die Reihen von Nutzpflanzen (50) angepasst wird.

12. Verfahren zum Ausbringen eines jeweiligen Verteilguts, ausgeführt mittels einer landwirtschaftlichen Verteilmaschine (200), welche Verteilmaschine (200) ein Verteilgestänge (10), mit einem Mittelteil und zwei seitlichen Auslegern, die jeweils über eine Schwenkachse drehbar mit dem Mittelteil verbunden sind umfasst, wobei eine Ausbringung des jeweiligen Verteilguts mittels einer Mehrzahl von am Versteilgestänge (10) angeordneten Ausbringelementen (20) durchgeführt wird, und wobei eine Steuerung und/oder Regelung der Ausbringelemente (20) basierend auf erfassten Pflanzenmerkmalen mittels einer Steuereinrichtung durchgeführt wird, welche Steuereinrichtung mit einer Erfassungseinrichtung (30) signalverbunden und/oder signalverbindbar ist, **gekennzeichnet durch** eine Erfassung von Pflanzenmerkmalen, zumindest eines Teilbereichs einer Bestandshöhe (H) eines Pflanzenbestands, während einer Überfahrt über eine landwirtschaftliche Fläche (300), mittels der Erfassungseinrichtung (30).

13. Verfahren nach Anspruch 12, **gekennzeichnet durch**, eine Einstellung einer Größe einer, mit dem jeweiligen Verteilgut zu behandelnden Fläche (A), insbesondere abhängig von den durch die Erfassungseinrichtung (30) erfassten Pflanzenmerkmalen.

14. Verfahren nach einem der Ansprüche 12 oder 13, **gekennzeichnet durch**, eine ergänzende Steuerung und/oder Regelung einer Ausbringmenge und/oder einer Art des jeweiligen Verteilguts, durch die Steuereinrichtung.

15. Verfahren nach einem der Ansprüche 12 bis 14, **gekennzeichnet durch**, ein Hinterlegen von Schwellenwerten für die Pflanzenmerkmale in der Steuereinrichtung und ein Steuern und/oder Regeln der Ausbringelemente (20) mittels der Steuereinrichtung anhand der Schwellenwerte.
